# EUROPEAN PATENT APPLICATION

(11) **EP 4 752 732 A1**
(43) Date of publication of application: **03.06.2026**
(21) Application number: 24215656.0
(22) Date of filing: 27.11.2024
(51) Int. Cl.: G06F 11/3668

(54) **COMPUTER-IMPLEMENTED METHOD, SYSTEM AND COMPUTER PROGRAM PRODUCT FOR REDUCING TEST CASE REDUNDANCY IN SOFTWARE TESTING**

(71) Applicant: Siemens Aktiengesellschaft, 80333 München (DE)
(72) Inventor: KRAUTWURM, Florian, 90459 Nürnberg (DE); PV, Hemanth, 560100 Bangalore (IN); SCHAFFER, Manuel, 90459 Nürnberg (DE); REISINGER, Carolin, 90459 Nürnberg (DE)
(74) Representative: Siemens Patent Attorneys

(57) **Abstract**

The present disclosure provides a computer-implemented method for reducing test case redundancy in software testing, the method being characterized by the steps:
analyzing, by an analysis module, source code of a plurality of first test cases as well as corresponding log files and test results of executed simulations for the plurality of first test cases as training data to identify similarities between the first test cases, wherein the analysis module applies a machine learning model for the analysis, and
identifying, by an evaluation module, redundant second test cases based on the identified similarities, wherein the evaluation module applies the trained machine learning model for the identification, and
removing, by a removal module, the redundant second test cases from a dataset of test cases to be tested.

The disclosure also relates to a corresponding system and computer program product.

## Description

The present invention relates to a computer-implemented method for reducing test case redundancy in software testing according to claim 1, a system for reducing test case redundancy in software testing according to claim 8, and a computer program product according to claim 15.

In Software testing, especially with huge and distributed teams, there is a significant chance to have redundant testcases. There is a greater probability on higher test levels (Feature and End2End Testing) but even with a shift left approach there is still large redundancy in testcases expected.

General approaches for software testing are for example described on Wikipedia (permanent link: https://en.wikipedia.orgwindex.phptitle=Software_testing&oldid=1235256894). The article provides a comprehensive overview of software testing practices and methodologies. It covers various aspects of the testing process, including test case design, execution, and different testing approaches. It mentions test automation techniques, which can enhance testing efficiency. The concept of regression testing is explained, emphasizing the importance of verifying software functionality after changes. The document also touches on exploratory testing and fuzzing techniques to uncover potential issues.

The paper "Redundancy Based Test-Suite Reduction" by Fraser et. al, a conference paper from 2007 (DOI: 10.1007/978-3-540-71289-3_23 · Source: DBLP) presents a novel approach to test-suite reduction in software testing. The paper addresses the common issue of redundant test cases. It indicates that the average test suite has approximately 25% duplicate tests, which can lead to inefficiencies and a false sense of quality. The authors propose a method to identify and eliminate redundancy within test suites, focusing on preserving the fault detection ability of the original test suite. Unlike traditional minimization techniques that simply discard test cases, this approach transforms test cases to avoid redundancy. The paper discusses the impact of their method on test coverage and mutant scores, showing that it can maintain or even slightly improve these metrics while reducing the overall size of the test suite. The authors also explore the computational complexity of their algorithm and its applicability to various testing scenarios. Furthermore, the authors propose to even show a correlation between test redundancies and an number of bugs in software, because developers test parts of the software several times while neglecting other parts and create a false feeling of quality with a huge amount of green test cases that deliver no insights.

There are known approaches to counter the problem of test duplication, but often they do not cover the problem in sum, or they need a very stringent way of doing things:
Model based testing often is a tool supported method, intended to specify the journeys and flows through a target system through modeling. These models contain all decision points plus the needed test data, for positive and negative test cases. By applying test generation algorithms like pairwise testing (there are more different algorithms for test case selection), one can be sure to not have duplicated testcases or sub-workflows, but one can still retain a high amount of test coverage. The method implies to have a central model, that can be feed to the algorithms and only works beforehand, that means, before even running the test cases.

Changing the model might also change the testcases, so it is hard to keep up with regression.

This also does not work for a very decentralized team setup up that is given in most modern large scale software development projects.

A second method is to use static code checks and apply scans for code duplication also test code. This might work on unit testcases, as they are standalone, but already tend to fail on higher level testcases. It also highly depends on the data structure used in the corresponding code repo.

Based on the known computer-implemented methods for software testing, the present invention addresses the challenge of efficiently identifying and eliminating redundant test cases in large and distributed software testing environments while maintaining comprehensive test coverage.

The invention solves this problem through a method according to claim 1.

The following paragraphs provide definitions and technical background information on the terms used in this patent application. The definitions should not be understood and limiting to the disclosure, but rather as hinting on some ways of understanding implementations of the invention while not excluding interpretations not mentioned in the definitions. Accordingly, other implementations are within the scope of the following paragraphs.

Module: Any module may be implemented as a software module installed on a server or cloud infrastructure. It could also be implemented in hardware/firmware as part of a computer system comprising a processor, memory, and data storage.

Analysis module: A software component configured to analyze source code, log files, and test results of test cases. In other words, the analysis module employs the machine-learning model and trains the model on known data regarding software testing.

Machine learning model: An artificial intelligence algorithm trained to identify similarities and/or patterns in test case data. This could include neural networks, decision trees, reinforcement learning or other machine learning architectures. The model may be implemented in software or specialized hardware accelerators. A suitable configuration for the machine learning model could be for example the derived by comparing different neural networks with regard to their speed and accuracy in analyzing a test data set with cases, e.g. by using the service AutoML.

The training could utilize various other machine learning techniques, such as supervised learning with labeled redundant test cases, or unsupervised learning to identify clusters of similar test cases.

Evaluation module: A software component that processes the output of the analysis module to identify potential redundancies in test cases. In other words, the evaluation module used the trained machine-learning model for inference, in particular to draw conclusions from test cases the model had not been trained on.

Simulation module: A software component responsible for executing test case simulations. It may interface with the software under test to run simulations and collect results. The simulation module could be deployed on dedicated testing infrastructure.

Review module: A software component that presents potential duplicate test cases to a human reviewer or automated review system. It may include a user interface for manual review. The review module receives decisions on suggested duplicates.

Removal module: A software component that removes confirmed duplicate test cases from the test suite. This may involve modifying test case repositories or databases.

Fuzzing: A technique that involves generating randomized or mutated inputs for test cases. A fuzzing module may be implemented to pre-process test cases before simulation.

Test case: A set of conditions, inputs, and expected results designed to verify specific functionality of software under test. Test cases may be stored as source code files in a source-code database or in specialized test management systems. First test cases belong to a data set that is used, in accordance with log files and test results, to allow for training of the machine learning model. Second test cases belong to a dataset that is to be analyzed with the trained machine learning model to find duplicates (inference of the model).

Log files: Records of events and outputs generated during test case execution. Log files may be plain text or structured data formats and stored in a log file database.

Test results: The outcomes of executed simulated test cases, typically indicating pass/fail status and other metrics. Results may be stored in databases or test management systems.

Review instance: The entity responsible for making final decisions on duplicate test cases. This could be a human reviewer or an automated system. For manual review, it may involve a graphical user interface.

In the context of this application, the output of one module often serves as input to the next module. For example, the analysis module transforms test case data into similarity metrics, which are then processed by the evaluation module. Data is typically passed between modules as digital data telegrams via software interfaces between the software modules. If the modules are distributed over a variety of systems, e.g. in part local and otherwise centrally hosted in the cloud (e.g. for "Al as a service"), communication modules can be used to communicate data between the modules.

Various means of data communication may be applicable, including:
- Wire-bound: Ethernet, fiber optics, power-line communication
- Wireless: 5G, 4G, Wi-Fi, Bluetooth, long-range radio

The specific communication methods used would depend on the deployment architecture and requirements of the testing environment.

Similarities: By comparing at least two test cases, similar scenarios can be identified. Similarities in the sense of this application can also be patterns that are recognizable in the compared test cases.

Simulations: As used herein, the term "simulations" refers to the process of executing test cases in a controlled environment that mimics the actual software system under test. These simulations involve running the test cases with predefined inputs and comparing the outputs against expected results. Simulations may include executing the full test case or portions thereof, and may be performed on isolated components or the integrated system. The purpose of these simulations is to verify the behavior of the software and identify potential issues or redundancies in the test suite.

Redundancy: As used herein, the term "redundancy" refers to the presence of multiple test cases within a software test suite that verify the same or substantially similar functionality, behavior, or code paths of the software under test. Redundant test cases produce equivalent or nearly equivalent results when executed, and do not provide significant additional test coverage or fault detection capability beyond what is already covered by other existing test cases in the suite. In the context of this invention, redundancy may manifest as:
1. Duplicate test cases with identical or nearly identical test steps, inputs, and expected outputs.
2. Overlapping test cases that cover the same functionality but with minor variations in test data or execution paths.
3. Subsumed test cases where the coverage provided by one test case is entirely contained within the coverage of another, more comprehensive test case.
4. Functionally equivalent test cases that may have different implementations or approaches but ultimately verify the same software behavior or requirements.

The identification and management of redundancy in test suites is crucial for optimizing testing efficiency, reducing execution time, and maintaining a focused and effective set of test cases.

The AI based method of the invention looks for pattern or features in the log files to and test outputs to identify similarities between test cases. As product and test logs contain a lot of messages, be it from the testcases, error handling and logging in the product or even logs that are written by some third-party component, this is used as input for the similarity decision. Furthermore, these logs contain timestamps that can be used as further input to verify the similarities as they give hints to the actions done to the system and the respective reaction, even in parallel setups (either parallel computed algorithms or parallel running testcases). Additionally, the product or test can even contain so-called tracelogs to follow a complete workflow through (even a distributed) system. These traces can be used to further learn and compare on similarities.

The system handles test cases that are partially redundant or have overlapping functionality by detecting matches in subtraces or the causality: e.g., if A (a sub test) fails also B fails always, but not the other way around. For overlapping functionality this can be handled by the Al analyzing and comparing also subparts of logs and traces.

There are two alternative mechanisms that can be employed to prevent the system from incorrectly identifying unique test cases as redundant:
Usage of an optional manual review by an expert that afterwards decides if it is a real duplicate or not, or

Taking the testcases that are marked as duplicates and running them many times with real input and randomly generated input. If the testcase evaluation still halts, this is evidence and if the test cases show they same pattern (both passes, both fail) or a consistent but contradicting patter as one might be a negative testase (A passes, B fail and the other run A fail, B passes). Afterwards the system could also automatically decide if it found real duplicates.

In the following paragraphs, a few alternative embodiments or improvements will be discussed.

The system could incorporate additional sources of input data beyond just the test case logs and results. For instance, it could also analyze the source code of the software under test, the test case descriptions, and even developer comments. This additional context could help the AI better understand the purpose of each test case and more accurately identify true redundancies.

The interface presented to the reviewer for deciding on duplicates could be designed in various ways to enhance decision-making. For instance, it could include a visual diff tool that highlights the differences between potentially redundant test cases, both in terms of their code and their execution results. It could also provide a confidence score for each suggested redundancy, based on the Al's analysis, to help prioritize the reviewer's attention. The reviewer could be presented to following information to aid in the decision-making process about potential duplicates: testcase description, logs and traces if available, history of the last testcase execution results.

The proposed solution can work on the aftermath of creating and running testcases and is able to figure out test redundancy and test duplications. The system is an AI based model, that is trained on the source code of the testcases, as well as the logfiles and test results of each run. Key features that can be applied in the context of the invention are:
- In analyzing the logfiles and outputs of all test runs, the AI is able to find patterns and do a matching between the results of testcases that it tagged as similar.
- By making historical comparisons on the results (this is an optional step), the code changes and input data it further hardens the decision and is able to start a dedicated test run, just containing the tagged supposed duplicates. To ease the decision an additional step can be introduced where the inputs for the testcase are randomized using fuzzing. This will generate testcases that don't make sense from a functional point of view, but can help in deciding if test cases yield similar results.

- If the results are still the same, the tests are moved to a review (either automated or by an educated person) and the decision can be finalized.
- If reinforced learning is used on the Al, the reward function can be based on being real duplicates or not.

Another advantage of the inventive method is that when the AI is analyzing the logfiles and output files, this matching cannot only be done between whole test cases or Journeys but also on sub test cases / sub journeys.

This approach is able to run in parallel to other default test processes and can also be applied in the aftermath of writing and running testcases. It creates insights for distributed teams and projects and helps to keep the test suites up to date, save costs and energy which closely relates to sustainability as well.

The invention as described in claim 1 offers, in its various embodiments, several key advantages over previous solutions:
1. Comprehensive analysis: By analyzing not only the source code of test cases, but also corresponding log files and test results, the method provides a more holistic view of test case behavior and potential redundancies. This multi-faceted approach allows for more accurate identification of similarities between test cases.
2. Machine learning-powered analysis: The use of a machine learning model for analysis enables the system to identify complex patterns and similarities that may not be apparent through traditional rule-based approaches. This can lead to more nuanced and accurate redundancy detection.
3. Adaptive and improving performance: The machine learning model can be continuously trained on new data, allowing the system to adapt to changes in software and testing practices over time. This ensures that the redundancy detection remains effective as the software under test evolves.
4. Simulation-based verification: By performing test case simulations with potentially similar test cases, the method provides an additional layer of verification beyond static analysis. This helps reduce false positives and ensures that only truly redundant test cases are flagged for review.
5. Optional human oversight: The inclusion of a review instance allows for expert judgment in the final decision-making process. This combines the efficiency of automated analysis with the nuanced understanding of human reviewers, leading to more reliable results.
6. Iterative improvement: The feedback loop created by the review process can be used to refine and improve the machine learning model over time, potentially through reinforcement learning techniques.
7. Scalability: The automated nature of the analysis and initial redundancy detection makes this method highly scalable, capable of handling large and complex test suites that would be impractical to analyze manually.
8. Resource optimization: By identifying and removing redundant test cases, the method helps optimize testing resources, reducing execution time and computational costs associated with running unnecessary tests.
9. Improved test suite maintainability: Regular identification and removal of redundant test cases helps keep the test suite lean and manageable, making it easier for development teams to maintain and update tests over time.
10. Applicability to various testing levels: The method can be applied to different levels of testing, from unit tests to integration and system tests, providing a comprehensive solution for test suite optimization across the entire testing pyramid.

These advantages collectively contribute to more efficient, effective, and maintainable software testing processes, ultimately leading to higher quality software products.

The ultimate benefit of the inventive software testing method is that testing the software can be done even more thorough than previously, resulting in software that shows less bugs, data losses, maintenance downtime for upgrade or security patching when operated in its intended field after release.

For example, grid control software consists of hundreds of different software components and needs to run without fault all the time when used to control operations for an electrical grid.

From the product brochure "intelligent control center technology - Spectrum Power", Siemens AG 2017, Article-No. EMDG-B90019-00-7600, software for a so-called "Supervisory Control and Data Acquisition (SCADA)" system for use in a control center is known. SCADA systems have long been known for controlling and monitoring energy networks (Wikipedia permanent link: https://en.wikipedia.org/w/index.php?title=SCADA&oldid=858433181). Measurement values from sensors, for example from voltage measuring devices and current measuring devices in the energy network, are aggregated and transmitted to the control center. Control commands are sent to the energy network to control circuit breakers, tap changers of transformers, disconnectors and other controllable equipment in the energy network, as well as to control energy generators such as power plants. These control commands are received and processed by "Remote Terminal Units" (RTUs), "programmable logic controllers" (PLCs) and "intelligent electronic devices" (lEDs) to control the circuit breakers, disconnectors, etc. In the control center, a local data center is often provided on which the control center software, such as Spectrum Power, runs. The control center software is usually operated in a central computer arrangement, which can be designed as a data center with processors, data storage devices and screens. The term "central" refers to the fact that all measurement data from the energy network and all control commands for the energy network are processed centrally. Technicians are kept on standby around the clock in the control center to monitor the SCADA displays of the current operating status of the energy network and to take countermeasures such as shutting down a network section in the event of a fault.

A partial or complete design of the computer arrangement or the control center software as a cloud application, i.e. a server arrangement with decentrally distributed resources for data processing and data storage, which are connected via a data network such as the Internet, can also be carried out.

As a side effect of the ever-increasing spread of distributed energy generation, for example through photovoltaic systems or wind turbines, the determination of a system state of the energy network is made more difficult by the ever-increasing number of local energy generators feeding into the low and medium voltage network. In particular, recording the current state in the lower voltage levels (medium and low voltage) is becoming increasingly important because the networks in the lower voltage levels are more heavily loaded by the decentralized feed-ins.

Electric power distribution is the final stage in the delivery of electricity, traditionally comprising the delivery of electricity to households and small-scale industrial consumers. However, in recent years, the pool of energy resources connected to the distribution grid (distributed energy resources, DERs) has been substantially diversified, with further diversification underway. This diversification is owed predominantly to the integration of distributed power generation (e.g., renewable energy sources like solar PV) and of charging points for electric vehicles into the power distribution network, as well as due to heating electrification with the integration of heat pumps.

All these factors make it more difficult not only to determine the current network status but also to predict the future network status.

The dependence on weather influences is increasing because, for example, solar cells are strongly influenced by cloud cover and wind turbines by wind strength. These problems also have an impact on the next higher voltage level - a high-voltage energy transmission network - which is therefore more difficult to control and predict.

The operating personnel in a control center for an electrical energy network require software for evaluating measurement data so that, for example, a network state can be determined by means of a network analysis. For the typically meshed transmission network of the high-voltage or medium-voltage level, measurement data such as voltage, current, active power, reactive power and, if necessary, phase angle can usually be recorded for a large number of measuring points. Often the measurement data is even redundant, so that a high accuracy and reliability of the measurement data is achieved.

As can readily be understood from the examples presented above, there is an ever-increasing need to further develop already complex software ecosystems in grid control centers, adding even more complexity and potential errors, bugs and faulty algorithms to the code. This is the reason the grid control software is a primary example for the need for improved software testing before deployment to utility companies that run the electrical grid.

The Al-based test case redundancy management system could significantly enhance the testing processes for electrical grid control software. These systems are critical for managing power distribution, load balancing, and responding to grid fluctuations in real-time. Due to the complexity and safety-critical nature of grid control software, extensive testing is required to ensure reliability and prevent outages. By implementing this AI system, utilities and grid operators could optimize their test suites, identifying and eliminating redundant tests across various components such as SCADA systems, energy management systems, and smart grid applications. This would lead to more efficient testing processes, faster deployment of software updates, and improved overall grid reliability. The system would be particularly valuable in testing scenarios involving renewable energy integration, demand response programs, and microgrid management, where the interplay of multiple software and firmware systems creates complex testing requirements. By improving the testing of grid control software before release, contingencies and blackouts can be mitigated. This saves costs and improves reliability of the grid during operation.

The invention can be applied to many fields of application for software, e.g. in a business or technical context for industrial applications. The following paragraphs highlight a few additional application scenarios.

The Al-based test case redundancy management system could be applied to healthcare software testing, particularly for electronic health record (EHR) systems and medical device software. In this industry, software reliability is critical, and thorough testing is essential. However, due to the complexity of healthcare systems and regulatory requirements, test suites often become bloated with redundant tests. By implementing this AI system, healthcare software developers could identify and eliminate duplicate tests, ensuring comprehensive coverage while reducing testing time and costs. This would be particularly valuable for maintaining compliance with regulations, where efficient and effective testing processes are crucial.

In the financial services industry, software systems handling transactions, risk management, and regulatory compliance require extensive testing. The Al-based redundancy management system could be applied to streamline test suites for banking software, trading platforms, and financial reporting tools. By identifying and eliminating redundant tests, financial institutions could reduce the time and resources spent on quality assurance while maintaining high standards of software reliability. This would be particularly beneficial in areas like algorithmic trading systems or fraud detection software, where the complexity of test cases often leads to unintentional duplication.

The automotive industry increasingly relies on complex software systems for vehicle control, infotainment, and advanced driver-assistance systems. The Al-based test case redundancy management system could be applied to automotive software testing processes to optimize test suites for these critical systems. By identifying and eliminating redundant tests, automotive manufacturers and suppliers could streamline their testing processes, reduce time-to-market for new features, and ensure comprehensive coverage of safety-critical functions. This application would be particularly valuable in the development of autonomous driving systems, where extensive testing is required to ensure safety and reliability.

Telecommunications companies manage complex network infrastructure software that requires extensive testing to ensure reliability and performance. The Al-based redundancy management system could be applied to test suites for network management software, routing protocols, and service delivery platforms. By identifying and eliminating redundant tests, telecom companies could optimize their testing processes, reduce the time required for software updates and new feature deployments, and improve overall network reliability. This application would be particularly beneficial in the rollout of 5G networks and services, where rapid development and deployment cycles necessitate efficient testing practices.

E-commerce platforms involve complex software systems handling user interfaces, payment processing, inventory management, and more. The Al-based test case redundancy management system could be applied to streamline test suites for these platforms, identifying and eliminating duplicate tests across various components. This would help e-commerce companies maintain comprehensive test coverage while reducing the time and resources required for quality assurance. The system would be particularly valuable in optimizing tests for critical functions like checkout processes, security features, and performance under high traffic loads, ensuring a robust and reliable shopping experience for users.

In a further preferred embodiment of the inventive computer-implemented method, a plausibility check is performed with the following steps: performing, by a simulation module, test case simulations with second test cases identified as potentially being similar, and suggesting, by a review module, potential duplicate second test cases to a review instance based on results of the performed simulations, and receiving, in the review module, a decision from the review instance if the suggested duplicate second test cases are confirmed. This optional plausibility check introduces another quality gate into the duplicate recognition process of the inventive method, assuring improved accuracy.

In a further preferred embodiment of the inventive computer-implemented method, the method comprises presenting a visual comparison of potential duplicate second test cases to the review instance, wherein the visual comparison highlights differences in test case code and execution results. This visual representation could include side-by-side code comparisons with syntax highlighting, diff-style output showing specific lines or sections that differ, and graphical representations of execution paths or output differences. The visual comparison could also incorporate interactive elements, allowing reviewers to drill down into specific aspects of the test cases for more detailed analysis.

In a further preferred embodiment of the inventive computer-implemented method, suggesting potential duplicate second test cases is additionally based on at least one of the following aspects: test cases that have been pre-processed by fuzzing, by a fuzzing module; a historical comparison.

By considering fuzzed versions of test cases, the system can identify redundancies that may not be apparent in the original test cases. This pre-processing step enhances the ability to differentiate between similar test cases by introducing randomized variations. Fuzzing can help uncover edge cases or unexpected behaviors that may not be apparent in the original test cases. Additionally, fuzzing can be implemented in various ways, such as mutation-based fuzzing where existing inputs are slightly modified, or generation-based fuzzing where entirely new inputs are created based on the input format specifications. This diversity in fuzzing techniques could help uncover more subtle differences between seemingly similar test cases. The fuzzing process specifically helps in differentiating between similar test cases because test cases that are similar should show similar behavior with the same fuzzed input.

Historical comparison allows the system to leverage past execution data to make more informed decisions about potential redundancies. This could involve analyzing trends in test case behavior over time or comparing current results with historical baselines. The historical comparison step could be enhanced by implementing different methods of time series analysis. For example, dynamic time warping could be used to compare test case execution patterns over time, even if they occur at different speeds or with slight timing variations. This could help identify redundancies in test cases that might appear different due to performance variations but are functionally equivalent. The historical comparison allows for an evaluation of the consistency of test case results over time by analyzing at least one of the following criteria: Historical test result, network log, product logs and pipeline logs and traces. These criteria can be mapped and the history is saved e.g. via repositories based on a retention period (that is of course configurable and needs to be handled the real projects).

In a further preferred embodiment of the inventive computer-implemented method, fuzzing comprises generating randomized inputs for the second test cases identified as potentially redundant. This can involve techniques such as boundary value analysis, where inputs near the edges of valid ranges are tested, or combinatorial testing, where different combinations of input parameters are explored. The fuzzing process can be tailored to the specific types of inputs expected by the test cases, ensuring that the generated inputs are both diverse and relevant.

In a further preferred embodiment of the inventive computer-implemented method, performing the historical comparison comprises analyzing execution patterns of the identified second test cases over multiple previous test simulations, and identifying consistent similarities or differences in execution results across the previous test simulations. This approach allows for a more robust identification of redundancies by considering the behavior of test cases over time. It can help distinguish between test cases that may appear similar but have different long-term behavior or sensitivities to changes in the system under test.

In a further preferred embodiment of the inventive computer-implemented method, the machine learning model makes use of reinforcement learning. Reinforcement learning allows the model to improve its redundancy detection capabilities over time based on feedback from the review process. The model can learn to adjust its similarity thresholds and feature importance based on which suggested redundancies are confirmed or rejected by reviewers. To apply the reinforcement learning, a reward can be given to the machine learning model based on the accuracy of the suggested potential duplicate test cases. The reward is used to improve future redundancy detection. For example, if the potential duplicate test cases suggested by the machine learning model are confirmed by the review instance, a reward of +100 can be given in a feedback loop to the model, otherwise a rewards of -50 is assigned.

In a further preferred embodiment of the inventive computer-implemented method, the machine learning model makes use of an ensemble of neural networks. An ensemble approach combines multiple models, potentially of different types, to improve overall prediction accuracy and robustness. This could include convolutional neural networks for analyzing structural patterns in test case code, recurrent neural networks for processing sequential log data, and transformer models for capturing complex relationships between different aspects of test cases. This ensemble could include different types of neural networks (e.g., convolutional neural networks, recurrent neural networks, transformer models) working in parallel to analyze the test case logs and results. Each model in the ensemble could specialize in detecting different types of redundancies, potentially improving the overall accuracy of the system.

Based on known arrangements for network analysis, the invention further addresses the challenge of providing an arrangement that enables reducing test case redundancy in software testing even in large and distributed software testing environments while maintaining comprehensive test coverage.

The invention solves this problem through a system for reducing test case redundancy in software testing according to claim 8. Preferred embodiments result from the dependent claims 9 to 14, whereby the same advantages as initially explained for the inventive computer-implemented method apply analogously.

Based on known computer program products for network analysis, the invention further addresses the challenge of providing a computer program product that enables reducing test case redundancy in software testing even in large and distributed software testing environments while maintaining comprehensive test coverage.

The invention solves this problem through a computer program product according to claim 15. The same advantages as initially explained for the inventive computer-implemented method apply analogously.

To explain the invention further, the following paragraphs elaborate on a referred implementation example.

A system with a "Centralized Test Case Repository integrated with automatically finetuned Large Language Models (LLMs)" is suggested to manage, optimize, and deduplicate test cases efficiently.

This Centralized Test Case Repository with LLM capability addresses the challenges of test case management in large and distributed teams. It ensures that test cases are unique, high-value, and well-organized while providing Al-powered insights that continuously optimize the testing process. This approach not only prevents duplication but also enables smarter testing strategies, making it a valuable solution for modern software development and testing environments.

Currently redundant test cases can lead to inefficiencies, increased maintenance, and slower test execution times. The proposed Intelligent Repository acts as a single source of truth for all teams, providing a collaborative platform that ensures efficient use of testing resources.

The fine tuned LLM that is integrated to the Repository is trained on the Project and domain documentation. It is trained on the product features, architectural and other technical documentations. Since the Testcase repository is connected to a Source Code repository, the model (a finetuned LLM) is also trained on source code of the Product or Project.

The proposed system has several Key Features:
1. Centralized Test Case Repository:
   ∘ A unified repository that stores all test cases across different teams and projects.
   ∘ Ensures global access to the same pool of test cases, preventing duplication by design.
   ∘ Serves as a scalable and accessible platform for both small and large teams working in different locations.
2. Capability for Redundancy Detection:
   o The Repository can analyze natural language descriptions, metadata, and expected outcomes of test cases to identify semantic similarities between them.
   ∘ It goes beyond surface-level text matching and can recognize test cases that may appear different but in fact test the same functionality.
   ∘ It automatically flags potentially redundant test cases as they are added to the repository, preventing duplication from the outset.
3. Test Case Clustering:
   o The smart repository groups similar test cases into clusters based on functionality, inputs, outputs, or behaviors.
   ∘ This clustering helps in organizing the test suite efficiently and identifying overlapping or closely related tests.
   ∘ Teams can easily navigate the clustered groups, streamline test execution, and make decisions on consolidating tests within clusters.
4. Test Case Impact Analysis:
   o The testcase repo is connected to a source code repository & CI/CD tools. CI/CD, short for continuous integration and delivery, is a set of practices that automate the process of building, testing, and publishing software changes.
   ∘ The system integrates with version control and CI/CD tools to analyze code changes and determine their impact on the existing test cases.
   ∘ The LLM can evaluate whether new test cases are necessary or if existing ones already provide sufficient coverage.
   ∘ It helps in reducing redundant test creation when new features or bug fixes are implemented by identifying which areas of the application are impacted.
5. Test Case Optimization:
   ∘ The Repository continuously evaluates the overall test suite for redundant, obsolete, or low-value test cases.
   ∘ It suggests optimization strategies such as merging test cases, removing obsolete ones, and ensuring efficient test coverage.
   ∘ It ensures that the test suite remains lean, focusing on high-value, unique tests that provide the greatest benefit for quality assurance.
6. Automated Collaboration across distributed teams:
   ∘ Teams across different locations and time zones can access and contribute to the centralized repository, ensuring that no effort is duplicated.
   ∘ The repository fosters collaboration by making it easy for teams to see which test cases already exist and what areas are already covered.
   ∘ The repository can provide suggestions that are automatically generated to promote best practices and prevent redundant efforts.
7. Continuous Learning and Feedback Loops:
   o The LLM which is integrated with the repository improves over time by learning from the test cases it analyzes, ensuring that its redundancy detection and optimization suggestions become more accurate.
   ∘ Continuous feedback loops allow the system to adapt to evolving test case strategies and changes in software requirements.
   ∘ This results in a dynamic and intelligent repository that grows smarter as it processes more test cases.

An exemplary workflow can be described as follows:
1. Test Case Addition:
   ∘ When a new test case is added, the LLM checks the repository for existing test cases that may be similar or redundant.
   ∘ The system flags redundant test cases and provides suggestions for modifications if necessary.
2. Test Case Clustering:
   ∘ Test cases are automatically grouped into clusters based on their semantic similarities, making it easier for teams to navigate and manage them.
3. Impact Analysis:
   ∘ As new code changes are introduced, the LLM analyzes which existing test cases are affected and suggests whether new tests are needed or if existing ones suffice.
   ∘ The system prioritizes test cases for execution based on the impacted areas.
   ∘ The associated risk is assessed and testing is based on the risk assessment.
4. Optimization and Maintenance:
   o The system periodically reviews the test case repository, identifying redundant or obsolete test cases and recommending which ones to remove, merge, or optimize.
   o It ensures that the test suite remains efficient, reducing the maintenance burden for teams.

LLM Capability for Redundancy Detection refers to the ability of a Large Language Model (LLM) to analyze, understand, and identify test cases that perform the same or similar functionality. The redundancy detection process leverages advanced natural language processing (NLP) techniques to go beyond simple keyword matching or syntactical comparisons. It focuses on semantic understanding, enabling the system to detect meaningful overlap between test cases even when they are written differently.
1. Semantic Analysis:
   ∘ LLMs use a deep understanding of natural language to read the descriptions, metadata, inputs, outputs, and expected outcomes of each test case.
   ∘ They capture the intent behind the test case, which helps in identifying whether two test cases, despite being worded differently, are effectively testing the same scenario or functionality.
2. Contextual Understanding:
   ∘ LLMs are trained to grasp the broader context in which a test case is written. For example, they can recognize when test cases for different parts of the application are still testing similar functionality, such as authentication workflows, input validation, or error handling.
   ∘ They can identify fringe cases or minor variations and determine whether they are significant enough to justify having separate test cases or if they are redundant.
3. Similarity Detection:
   o The LLM analyzes each test case against the others in the repository, looking for commonalities in how they function and what they verify.
   ∘ It evaluates how similar the test steps, inputs, outputs, and goals are, and flags those test cases that are highly similar or identical in purpose.
4. Redundancy Suggestions:
   o After performing semantic analysis and similarity detection, the LLM recommends actions, such as merging or removing redundant test cases, or modifying test cases to make them more unique.
   o This ensures that test cases do not cover the same ground multiple times, leading to a more efficient and streamlined test suite.

The following example highlights an evaluation of two test cases.
- Test Case 1: "Validate user login with correct credentials"
   o Input: Valid username and password
   o Expected Result: Successful login
- Test Case 2: "Check that a user can log in using the correct details"
   o Input: Correct email and password
   o Expected Result: User is logged in and redirected to the dashboard While these test cases are written differently, they essentially test the same scenario. An LLM can understand the underlying purpose (successful login with valid credentials) and flag them as redundant. It would then suggest consolidating these test cases into one.

Benefits of this duplicate recognition are:
- Efficiency: Reduces duplication, ensuring that the test suite is lean and optimized for faster execution.
- Collaboration: Enables distributed teams to work together seamlessly, leveraging a shared repository and Al-driven suggestions.
- Cost Savings: By eliminating redundant test cases and streamlining test coverage, the repository minimizes unnecessary work and reduces maintenance costs.
- Scalability: The centralized nature of the repository allows it to scale to accommodate teams of any size, from small agile teams to large enterprise organizations.
- Al-Driven Insights: LLMs provide deeper insights into test cases, allowing for more intelligent decision-making and optimization than traditional methods.

There are also enhancements possible for additional features of the system:
1. Test Case Generation: The LLM could be trained to generate new test cases based on the existing ones in the repository. It could analyze the patterns and structures of the current test cases and generate new ones that cover different scenarios or fringe cases. This would help in expanding the test coverage without much manual effort.
2. Test Case Prioritization: The LLM could also prioritize test cases based on at least one of these attributes: importance, complexity, frequency of the associated feature's usage. This would help teams focus on the most critical tests first, improving the efficiency of the testing process.
3. Test Case Maintenance: The LLM could identify outdated test cases that no longer apply due to changes in the application. It could then suggest updates or flag these test cases for removal, helping to keep the test suite up-to-date.
4. Integration with Bug Tracking Systems: The system could be integrated with bug tracking systems to link test cases with reported bugs. This would provide valuable context and help in reproducing and resolving bugs faster.
5. Test Case Versioning: Just like code, test cases could also be versioned. The LLM could track changes to the test cases over time, providing a history of how the test case has evolved. This would be particularly useful in understanding the impact of changes to the application on the test cases.
6. Real-time Collaboration Features: The system could include features for real-time collaboration, such as commenting on test cases or suggesting edits. This would enhance the collaborative aspect of the system and improve communication among distributed teams.
7. Test Execution Prediction: Based on the historical data of test executions, the LLM could predict the outcome of a test case (pass/fail) before it's executed. This could help in identifying potential issues early in the testing process.
8. Test Case Tagging and Categorization: The LLM could automatically tag and categorize test cases based on their characteristics. This would make it easier to filter and find relevant test cases.

These enhancements would further improve the efficiency, collaboration, and maintenance of the test suite, making the Centralized Test Case Repository an even more powerful tool for managing and optimizing test cases.

Non-limiting and non-exhaustive examples are described with reference to the following figures.

For better explanation of the invention, the following schematic representation shows:

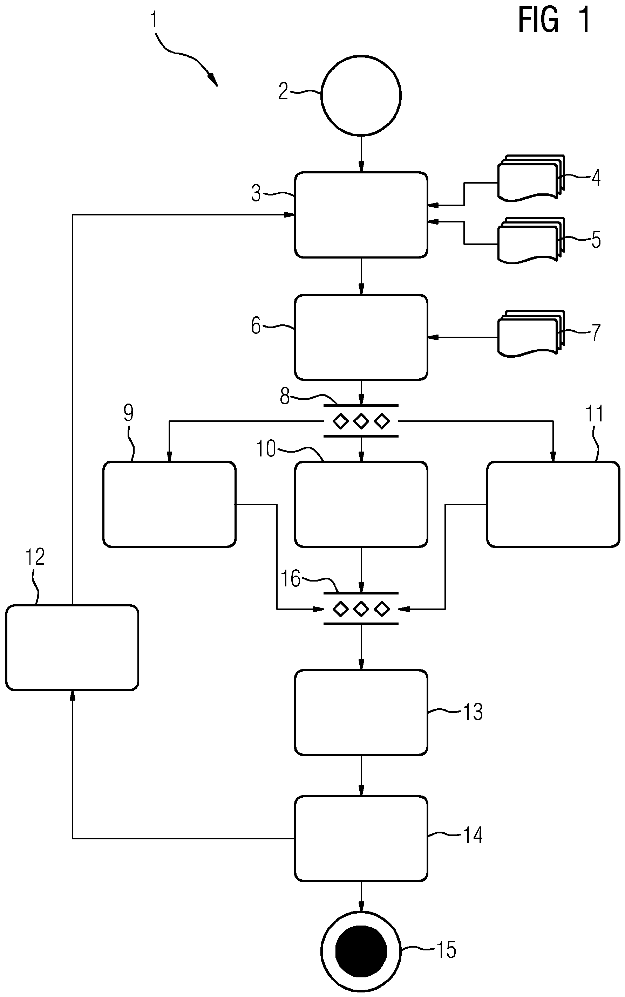

Figure 1 a flowchart illustrating the Al-based test case redundancy management method.

The following description sets forth exemplary aspects of the present disclosure. It should be recognized, however, that such description is not intended as a limitation on the scope of the present disclosure. Rather, the description also encompasses combinations and modifications to those exemplary aspects described herein.

Figure 1 illustrates a flowchart for an Al-based test case redundancy management method 1. The method 1 begins with starting step 2, which leads to step 3 where the AI learns from logs 4 and test results 5. This training step 3 trains a machine learning model and involves analyzing log files and test outputs to identify patterns and/or similarities between test cases.

Following the training phase, the method 1 moves to step 6 where the AI generates assumptions based on patterns and/or similarities in test case 7 descriptions. This step 6 utilizes the knowledge and insights gained from the logs 4 and test results 5 to identify potential redundancies in the test suite.

The method 1 then branches into three parallel paths at step 8. In a first path, step 10 initiates a test case run with test cases tagged as similar. In a second path, step 9 involves applying fuzzing to test cases and performing a run for all tagged test cases. This introduces randomized inputs to help differentiate between similar test cases. The third path, step 11, starts a historical comparison for runs of tagged test cases.

After these parallel methods complete, the results converge at step 16. The method 1 then moves to step 13, where the AI suggests potential duplicates to a review instance. This step 13 presents the identified redundancies for verification.

In step 14, the review instance decides on the duplicates, determining which test cases are redundant and which are unique. The optional human oversight contributes to the accuracy of the redundancy identification method. Automatic review is the default setting for this step. A combination of human oversight and automatic methods can also be applied.

A feedback loop is incorporated through step 12, where a reward is given to the AI agent based on the accuracy of its suggestions. This mechanism can help improve the Al's performance over time.

The method 1 concludes at step 15 after the review instance's decision, potentially leading to the removal of redundant test cases from the test-case data-set stored in the test-case database.

The Al-based test case redundancy management method 1 offers several advantages over traditional methods. By utilizing machine learning techniques, it can identify complex patterns and/or similarities that may not be apparent through manual inspection or rule-based systems.

The parallel methoding of fuzzing 9, test case runs 10, and historical comparisons 11 allows for a comprehensive analysis of potential redundancies from multiple perspectives.

The fuzzing step 9 is particularly valuable in uncovering subtle differences between seemingly similar test cases. By introducing randomized inputs, it can reveal edge cases or unexpected behaviors that distinguish otherwise similar tests. This helps reduce false positives in redundancy detection.

The historical comparison step 11 adds a temporal dimension to the analysis. By examining the behavior of test cases over time, it can identify consistent similarities or differences that may not be apparent from a single execution. This is especially useful for detecting redundancies in test cases that may have different short-term behaviors but exhibit similar long-term patterns.

The optional human review step 14 provides a critical safeguard against false positives and ensures that the final decisions on test case redundancy are made with domain expertise. This combination of Al-driven analysis and human oversight allows for a balance between efficiency and accuracy in managing test suite redundancy.

A number of implementations have been described. Nevertheless, it will be understood that various modifications may be made without departing from the spirit and scope of the disclosure. Accordingly, other implementations are within the scope of the following claims.

## Claims

1. A computer-implemented method (1) for reducing test case redundancy in software testing, the method (1) being **characterized by** the steps:
analyzing (3), by an analysis module, source code of a plurality of first test cases as well as corresponding log files (4) and test results (5) of executed simulations for the plurality of first test cases as training data to identify similarities between the first test cases, wherein the analysis module applies a machine learning model for the analysis, and
identifying (6), by an evaluation module, redundant second test cases based on the identified similarities, wherein the evaluation module applies the trained machine learning model for the identification, and
removing (15), by a removal module, the redundant second test cases from a dataset of test cases to be tested.

2. The computer-implemented method (1) of claim 1, wherein a plausibility check is performed with the following steps:
performing, by a simulation module, test case simulations (10) with second test cases identified as potentially being similar, and
suggesting (13), by a review module, potential duplicate second test cases to a review instance based on results of the performed simulations, and
receiving (14), in the review module, a decision from the review instance if the suggested duplicate second test cases are confirmed.

3. The computer-implemented method (1) of claim 2, further comprising:
presenting a visual comparison of potential duplicate second test cases to the review instance, wherein the visual comparison highlights differences in test case code and execution results.

4. The computer-implemented method (1) of claim 2 or 3, wherein suggesting potential duplicate second test cases is additionally based on at least one of the following aspects: test cases that have been pre-processed by fuzzing (9), by a fuzzing module; a historical comparison (11).

5. The computer-implemented method (1) of claim 4, wherein fuzzing (9) comprises generating randomized inputs for the second test cases identified as potentially redundant.

6. The computer-implemented method (1) of one of claim 4 or 5, wherein performing the historical comparison (11) comprises analyzing execution patterns of the identified second test cases over multiple previous test simulations, and identifying consistent similarities or differences in execution results across the previous test simulations.

7. The computer-implemented method (1) of one of the preceding claims, wherein the machine learning model makes use of reinforcement learning (12).

8. A system for reducing test case redundancy in software testing, the system comprising:
an analysis module configured to analyze (3) source code of a plurality of first test cases as well as corresponding log files (4) and test results (5) of executed simulations for the plurality of first test cases as training data to identify similarities between the first test cases, wherein the analysis module applies a machine learning model for the analysis, and
an evaluation module configured to identify (6) redundant second test cases based on the identified similarities, wherein the evaluation module applies the trained machine learning model for the identification, and
a removal module configured to remove (15) the redundant second test cases from a dataset of test cases to be tested.

9. The system of claim 8, wherein a simulation module and a review module are configured to perform a plausibility check, so that
by the simulation module, test case simulations (10) with second test cases identified as potentially being similar are performed, and
by the review module, potential duplicate second test cases to a review instance based on results of the performed simulations are suggested (13), and a decision is received (14) from the review instance if the suggested duplicate second test cases are confirmed.

10. The system of claim 9, wherein the review module is further configured to present a visual comparison of potential duplicate second test cases to the review instance, wherein the visual comparison highlights differences in test case code and execution results.

11. The system of claim 9 or 10, wherein the review module is further configured to base suggested potential duplicate second test cases additionally on at least one of the following aspects: test cases that have been pre-processed by fuzzing (9), by a fuzzing module; a historical comparison (11).

12. The system of claim 11, wherein fuzzing (9) comprises generating randomized inputs for the test cases identified as potentially redundant.

13. The system of claim 11 or 12, wherein the review module is further configured to perform the historical comparison (11) comprises by analyzing execution patterns of the identified second test cases over multiple previous test simulations, and by identifying consistent similarities or differences in execution results across the previous test simulations.

14. The system of claim 13, wherein the machine learning model makes use of reinforcement learning (12).

15. Computer program product comprising instructions that, when executed by a computer, cause the computer to perform a method (1) according to any one of claims 1 to 7.
